# EUROPEAN PATENT APPLICATION

(11) **EP 1 507 343 A1**
(43) Date of publication of application: **16.02.2005**
(21) Application number: 03792688.8
(22) Date of filing: 15.08.2003
(51) Int. Cl.: H04B 7/26, H04Q 7/22

(54) **TRANSMISSION POWER CONTROL METHOD, TPC COMMAND TRANSMISSION METHOD, AND RADIO COMMUNICATION DEVICE**

(30) Priority: 20.08.2002 JP 2002239734
(71) Applicant: MATSUSHITA ELECTRIC INDUSTRIAL CO., LTD., Kadoma-shi, Osaka 571-8501 (JP)
(72) Inventor: UEHARA, Toshiyuki, Yokosuka-shi, Kanagawa 239-0842 (JP); NISHIO, Akihiko, Yokosuka-shi, Kanagawa 239-0846 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2003/010367
(87) International publication number: WO 2004/019518

(57) **Abstract**

In a radio communication system where A-DPCH (Associated-Dedicated Physical Channel) to which soft hand-over is applied and HS-DPCCH (High Speed-Dedicated Physical Control Channel) to which hard hand-over is applied are mixed, in order to perform appropriate transmission power control of the HS-DPCCH, an HO judging section 11 judges whether the A-DPCH is in a soft hand-over state, and a transmission radio section 23, when the A-DPCH is not in the soft hand-over state, performs transmission power control of the HS-DPCCH according to a TPC command for the A-DPCH transmitted on the A-DPCH, and when the A-DPCH is in the soft hand-over state, performs transmission power control of the HS-DPCCH according to a TPC command for the HS-DPCCH transmitted on the HS-DPCCH.

## Description

### Technical Field

The present invention relates to a transmission power control method, a TPC command transmitting method, and a radio communication apparatus.

### Background Art

In the field of radio communication systems, HSDPA (High Speed Downlink Packet Access) has been proposed wherein a plurality of communication terminals share a downlink channel of high speed and large capacity and high speed packet transmission is performed on the downlink. Moreover, these days technology for increasing packet transmission speed on an uplink (hereinafter, this technology being called Fast-UL (Fast-Uplink)) has been under study. In the HSDPA, a plurality of channels are used such as an HS-PDSCH (High Speed-Physical Downlink Shared Channel), an A-DPCH (Associated-Dedicated Physical Channel), and an HS-DPCCH (High Speed-Dedicated Physical Control Channel). It is envisioned that also in the Fast-UL, a plurality of channels will be used such as an HS-PUSCH (High Speed-Physical Uplink Shared Channel), the A-DPCH, and the HS-DPCCH.

The HS-PDSCH is a downlink shared channel used in transmission of packets. The HS-PUSCH is an uplink shared channel used in transmission of packets. The A-DPCH is an uplink or downlink dedicated associated channel associating a shared channel, and has a pilot signal, TPC (Transmission Power Control) commands, control signals for maintaining communication, and the like transmitted thereon. The HS-DPCCH is an uplink or downlink dedicated control channel, and has signals for controlling a shared channel such as an ACK/NACK signal and a CQI (Channel Quality Indicator) signal transmitted thereon. Note that the ACK signal is a signal indicating that a high speed packet transmitted from a base station or a communication terminal was correctly demodulated in a communication terminal or a base station, and that the NACK signal is a signal indicating that a high speed packet transmitted from a base station or a communication terminal could not be correctly demodulated in a communication terminal or a base station. Furthermore, the CQI is a signal generated based on the channel quality and indicating the combination of, for example, the modulation scheme, block size, transmission power adjustment value, and the like of a packet. In the HSDPA, using the CQI, communication terminals notify their communication partner of the modulation scheme, block size, transmission power adjustment value, and the like that they desire. The CQI in the Fast-UL is also a signal generated based on the channel quality, but its specific contents have not yet been decided.

Note that in the Fast-UL, both uplink and downlink channels exist for each of the A-DPCH and HS-DPCCH. On the uplink HS-DPCCH, the CQI is transmitted. On the downlink HS-DPCCH, the ACK/NACK signal is transmitted. On the other hand, in the HSDPA, both uplink and downlink channels exist for the A-DPCH, while only an uplink channel exists for the HS-DPCCH. On the uplink HS-DPCCH, the CQI and the ACK/NACK signal are transmitted. Moreover, soft hand-over (SHO) is applied to the A-DPCH. On the other hand, hard hand-over (HHO) is applied to the HS-PDSCH, HS-PUSCH, and HS-DPCCH, so that the HS-PDSCH, HS-PUSCH, and HS-DPCCH are always connected to only one base station. Moreover, the timing for executing HHO on HS-PDSCH or HS-PUSCH is the same as the HHO timing of HS-DPCCH.

Transmission power control of the HS-DPCCH will be explained below taking the Fast-UL as an example using FIGs. 1 to 3. FIG. 1 shows the case where the A-DPCH is not in a SHO state, and FIGs. 2 and 3 show the case where the A-DPCH is in the SHO state. Here, the A-DPCH being not in the SHO state refers to the case where a communication terminal has the A-DPCH connected to only one base station, and the A-DPCH being in the SHO state refers to the case where a communication terminal has the A-DPCHs connected to a plurality of base stations at the same time.

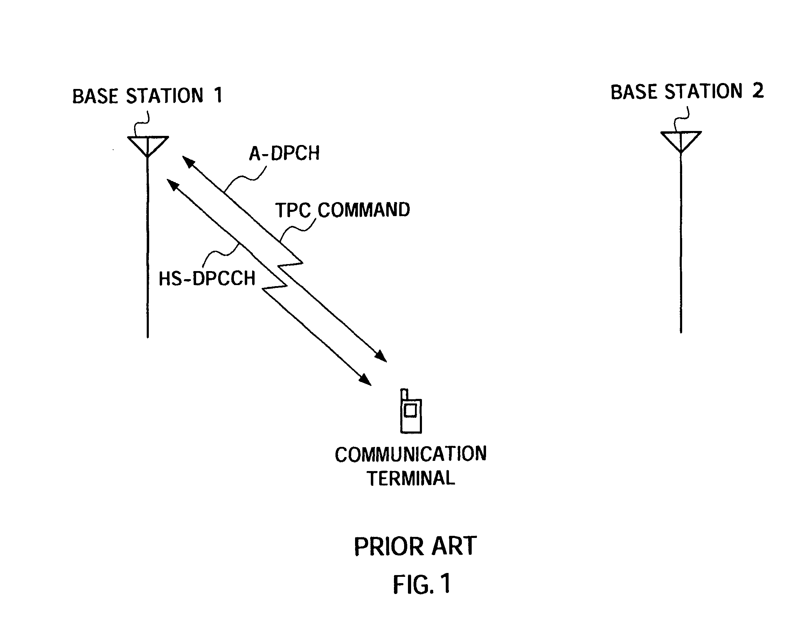

As shown in FIG. 1, the transmission power of the A-DPCH is controlled by generally well-known closed-loop transmission power control according to the TPC command such that a reception SIR of the A-DPCH is kept at a target SIR. Meanwhile, for the HS-DPCCH, the same transmission power control as for the A-DPCH is performed according to the TPC command for the A-DPCH. By this means, when the A-DPCH is not in the SHO state, the reception SIR of the HS-DPCCH can meet an SIR requirement.

When the communication terminal moves from a base station 1 towards a base station 2, the communication terminal connects the A-DPCHs to both the base stations 1 and 2, so that the A-DPCH gets in the SHO state. When the A-DPCH is in the SHO state, the transmission power control of the HS-DPCCH to which the HHO is applied is performed as follows.

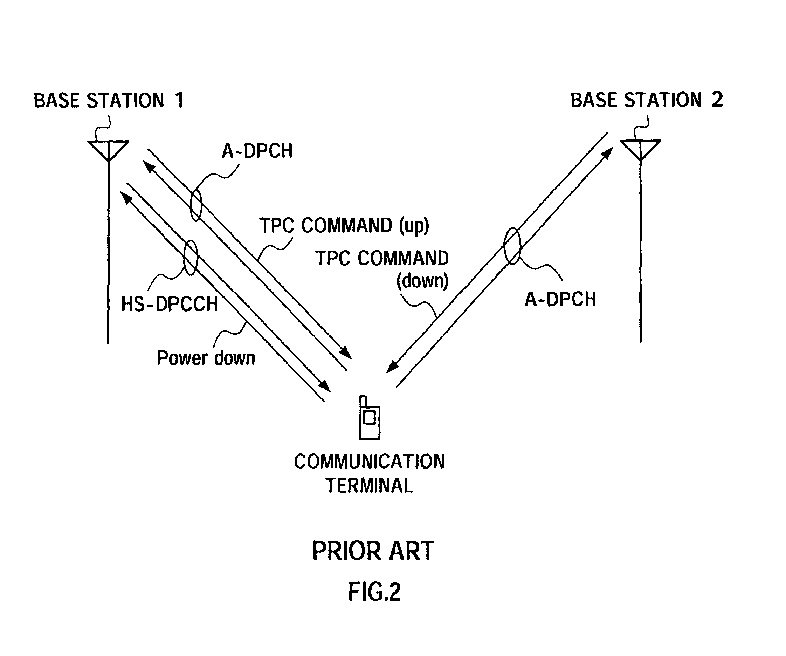

First, transmission power control of the uplink HS-DPCCH will be explained using FIG. 2. When the A-DPCH gets in the SHO state, both the base stations 1 and 2 receive the A-DPCH signal transmitted from the communication terminal. The base station 1 generates such a TPC command that the reception SIR at the base station 1 approaches a target SIR and transmits the TPC command to the communication terminal. Also, the base station 2 generates such a TPC command that the reception SIR at the base station 2 approaches a target SIR and transmits the TPC command to the communication terminal. If all of a plurality of received TPC commands are a TPC command to increase the transmission power, the communication terminal increases the transmission power of the A-DPCH, and if at least one of the plurality of received TPC commands is a TPC command to decrease the transmission power, the communication terminal decreases the transmission power of the A-DPCH. Hence, when the base station 1 has transmitted a TPC command to increase the transmission power and the base station 2 has transmitted a TPC command to decrease the transmission power, the communication terminal decreases the transmission power of the A-DPCH signal. Because the transmission power of the HS-DPCCH is controlled in the same way as that of the A-DPCH, the transmission power of the HS-DPCCH is also decreased along with that of the A-DPCH as shown in FIG. 2.

Here, for the uplink A-DPCH, when the A-DPCH is in the SHO state, the A-DPCH signal received by the base station 1 and the A-DPCH signal received by the base station 2 are selectively combined at a control station. Therefore, even if the transmission power of the A-DPCH is decreased as above, the SIR of the uplink A-DPCH at the control station meets an SIR requirement without causing a problem.

On the other hand, the HS-DPCCH to which the HHO is applied is connected to only one of the base stations even when the A-DPCH is in the SHO state. Thus, if the transmission power of the uplink HS-DPCCH is decreased along with the transmission power of the uplink A-DPCH as above, the SIR of the uplink HS-DPCCH may not meet an SIR requirement. In order to prevent this, the transmission power of the HS-DPCCH may be set at the sum of the transmission power of the A-DPCH and an offset.

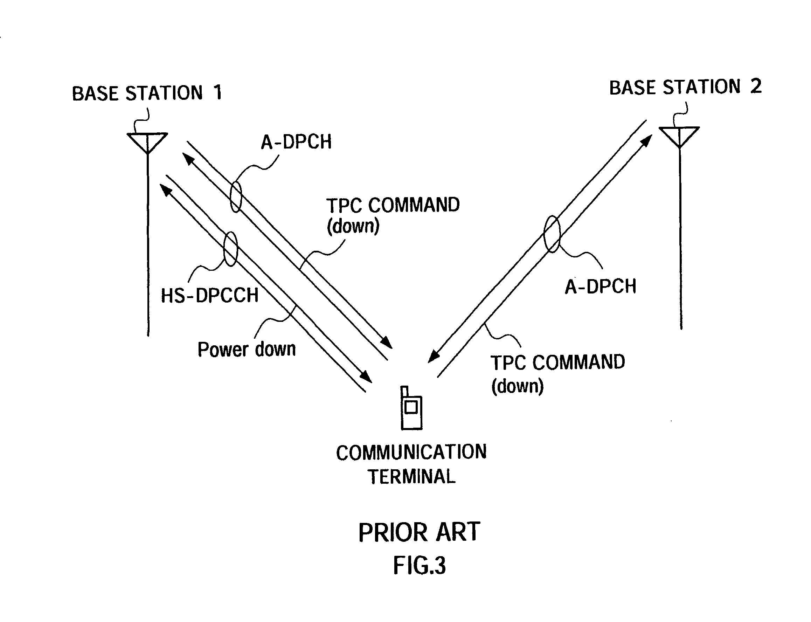

Next, transmission power control of the downlink HS-DPCCH will be explained using FIG. 3. When the A-DPCH gets in the SHO state, the communication terminal receives the A-DPCH signals transmitted from both the base stations 1 and 2. The communication terminal combines the A-DPCH signals transmitted from the base stations 1 and 2 and generates such a TPC command that the reception SIR of the combined signal approaches a target SIR and transmits the same TPC command to both the base stations 1 and 2.

Here, even when the reception SIR is less than the target SIR with the A-DPCH signal transmitted from the base station 1 only, the communication terminal transmits a TPC command to decrease the transmission power as shown in FIG. 3 if the reception SIR of the combined signal is greater than the target SIR. Because the transmission power of the HS-DPCCH is controlled in the same way as that of the A-DPCH, as illustrated in FIG. 3, at the base station 1, the transmission power of the HS-DPCCH signal is also lowered in accordance with the lowering of the transmission power of the A-DPCH signal as per the TPC command.

The HS-DPCCH to which the HHO is applied is connected to only one of the base stations even when the A-DPCH is in the SHO state. Therefore, if the transmission power of the downlink HS-DPCCH is decreased along with the transmission power of the downlink A-DPCH being decreased as above, at the communication terminal the SIR of the downlink HS-DPCCH may not meet an SIR requirement. In order to prevent this, the transmission power of the HS-DPCCH may be set at the sum of the transmission power of the A-DPCH and an offset.

However, if the transmission power of the HS-DPCCH is set at the sum of the transmission power of the A-DPCH and an offset as mentioned above, when the A-DPCH is not in the SHO state, or when enough SIR is obtained in communication with only one base station while the A-DPCH is in the SHO state, the transmission power of the HS-DPCCH will be excessive. If the transmission power of the HS-DPCCH is excessive, the transmission power, a limited radio resource, is consumed excessively. Thus, not only system throughput is reduced, but also interferences of the HS-DPCCH in other channels become large, thereby reducing system capacity. Note that this problem occurs not only with the Fast-UL but also with the HSDPA.

### Disclosure of Invention

An object of the present invention is to provide a transmission power control method, TPC command transmitting method, and radio communication apparatus that, in a radio communication system operating in a mixed channel environment involving a SHO-applicable A-DPCH and a HHO-applicable HS-DPCCH , performs appropriate transmission power control of the HS-DPCCH so that the transmission power of the HS-DPCCH do not become excessive and the reception SIR of the HS-DPCCH can be maintained at a required SIR.

In order to solve the previously mentioned problem and achieve the object, according to the present invention, in a radio communication system where A-DPCH to which SHO is applied and HS-DPCCH to which HHO is applied are mixed, when the A-DPCH is not in a SHO state, transmission power control of an HS-DPCCH is performed according to an A-DPCH TPC command transmitted on A-DPCH, and when the A-DPCH is in the SHO state, transmission power control of the HS-DPCCH is performed according to a HS-DPCCH TPC command transmitted on HS-DPCCH.

According to this feature, in a radio communication system where A-DPCH to which SHO is applied and HS-DPCCH to which HHO is applied are mixed, appropriate transmission power control of the HS-DPCCH can be performed even when the A-DPCH is in the SHO state.

### Brief Description of Drawings

FIG. 1 is a view for explaining conventional transmission power control when A-DPCH is not in a SHO state;
FIG. 2 is a view for explaining conventional transmission power control of an uplink HS-DPCCH;
FIG. 3 is a view for explaining conventional transmission power control of a downlink HS-DPCCH;

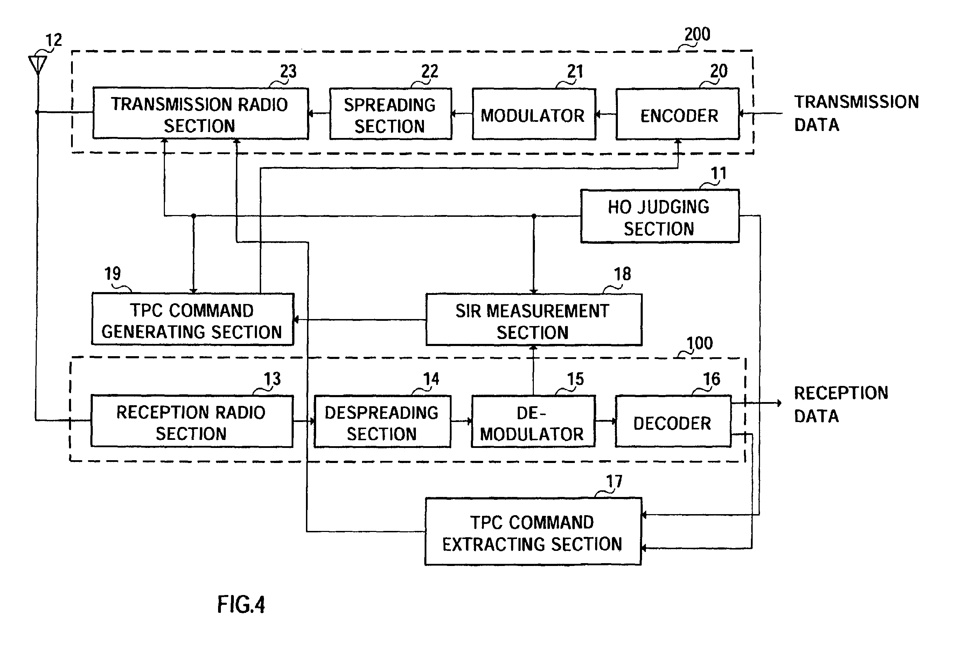

FIG. 4 is a block diagram showing the configuration of a radio communication apparatus according to one embodiment of the present invention;

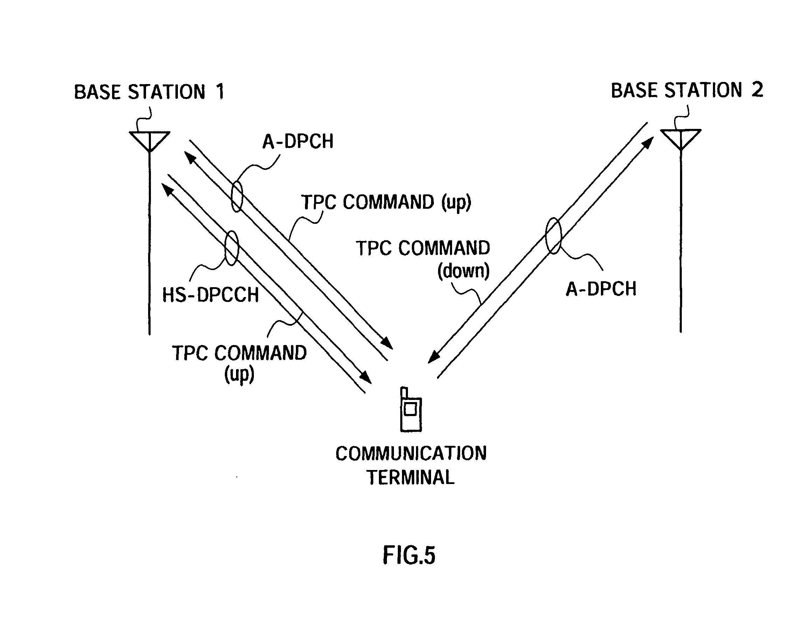

FIG. 5 is a view for explaining transmission power control of an uplink HS-DPCCH according to the embodiment of the present invention;

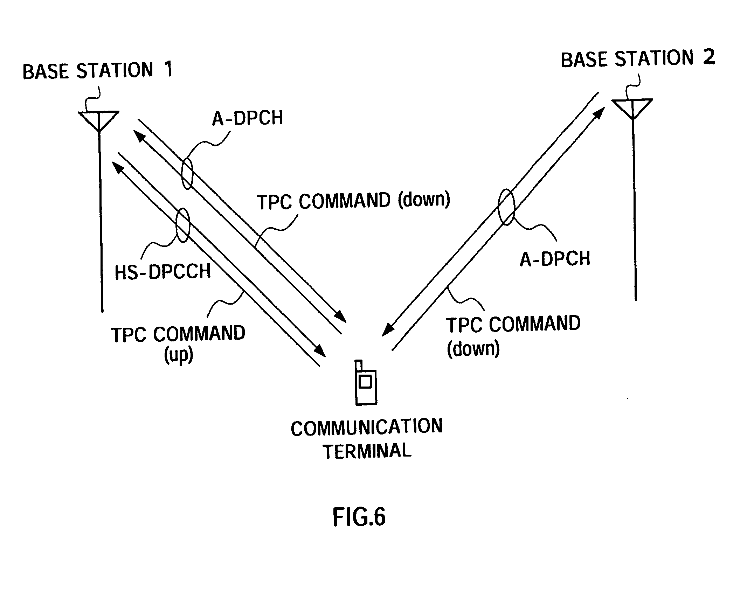

FIG. 6 is a view for explaining transmission power control of a downlink HS-DPCCH according to the embodiment of the present invention;

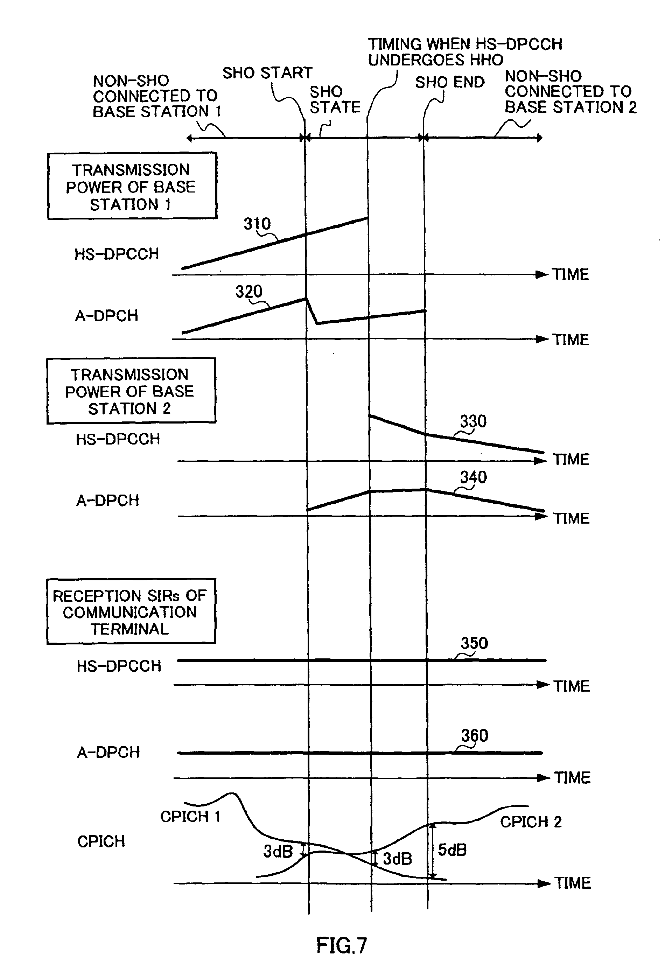

FIG. 7 is a view for explaining a relationship between transmission powers of base stations and reception SIRs of a communication terminal according to the embodiment of the present invention; and

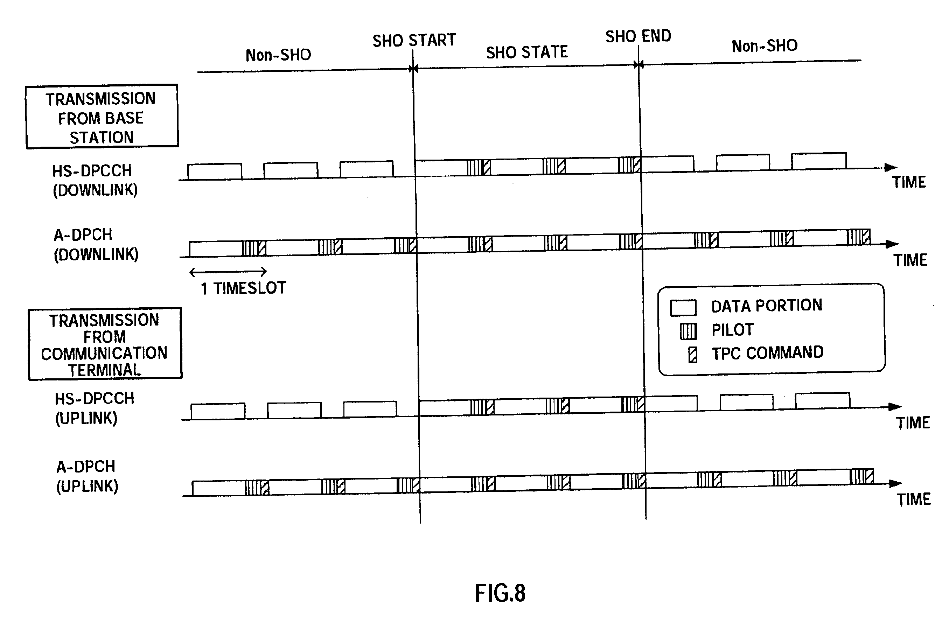

FIG. 8 is a view for explaining the start and end timings for transmitting TPC commands for the HS-DPCCH according to the embodiment of the present invention.

### Best Mode for Carrying out the Invention

An embodiment of the present invention will be described below. FIG. 4 is a block diagram showing the configuration of a radio communication apparatus according to one embodiment of the present invention. This radio communication apparatus is provided in a communication terminal apparatus and a base station apparatus in a mobile communication system. Moreover, this radio communication apparatus is used in a mobile communication system where the Fast-UL and/or HSDPA are implemented.

An HO (hand-over) judging section 11 judges whether the A-DPCH is in the SHO state, and inputs the judging result into TPC command extracting section 17, SIR measurement section 18, TPC command generating section 19, and transmission radio section 23. Note that the method of judging whether the A-DPCH is in the SHO state is described later.

A receiving section 100 comprises reception radio section 13, despreading section 14, demodulator 15, and decoder 16.

The reception radio section 13 performs processes such as down-conversion, AGC (Automatic Gain Control), and A/D conversion on a signal received via an antenna 12. The despreading section 14 despreads the received signal with a spreading code assigned to each channel. The demodulator 15 demodulates the despread signal such as a QPSK modulated signal. The demodulated signal is input into the decoder 16 and an SIR measurement section 18. The decoder 16 performs error correction decoding and CRC (Cyclic Redundancy Check) on the demodulated received signal to decode the demodulated received signal. By this means, reception data (a bit sequence) is obtained. The reception data is input into the TPC command extracting section 17.

The TPC command extracting section 17 extracts a TPC command included in a timeslot of the reception data based on the judging result of the HO judging section 11. When the HO judging section 11 has judged that the A-DPCH is not in the SHO state, the TPC command extracting section 17 extracts a TPC command for the A-DPCH from the reception data on the A-DPCH. In contrast, when the HO judging section 11 has judged that the A-DPCH is in the SHO state, the TPC command extracting section 17 extracts a TPC command for the HS-DPCCH from the reception data on the HS-DPCCH in addition to the above-described operation performed when the A-DPCH is not in the SHO state. The extracted TPC commands are input into the transmission radio section 23.

The SIR measurement section 18 measures the SIR of symbols of a pilot sequence out of the received signal based on the judging result of the HO judging section 11. When the HO judging section 11 has judged that the A-DPCH is not in the SHO state, the SIR measurement section 18 measures the SIR of the received signal on the A-DPCH. In contrast, when the HO judging section 11 has judged that the A-DPCH is in the SHO state, the SIR measurement section 18 measures the SIR of the received signal on the HS-DPCCH in addition to the above-described operation performed when the A-DPCH is not in the SHO state. The measured SIRs are input into the TPC command generating section 19.

The TPC command generating section 19 generates a TPC command based on the judging result of the HO judging section 11. When the HO judging section 11 has judged that the A-DPCH is not in the SHO state, the TPC command generating section 19 compares the SIR of the A-DPCH with a target SIR and, based on the comparing result, generates a TPC command for the A-DPCH. In contrast, when the HO judging section 11 has judged that the A-DPCH is in the SHO state, the TPC command generating section 19 compares the SIR of the HS-DPCCH with a target SIR and, based on the comparing result, generates a TPC command for the HS-DPCCH in addition to the above-described operation performed when the A-DPCH is not in the SHO state. Note that when the measured SIR is at or above the target SIR, a TPC command to decrease the transmission power (Down) is generated and when the measured SIR is below the target SIR, a TPC command to increase the transmission power (Up) is generated. The generated TPC commands are input into an encoder 20.

A transmitting section 200 comprises encoder 20, modulator 21, spreading section 22, and transmission radio section 23.

The encoder 20 performs convolution encoding and CRC encoding on transmit data (a bit sequence) to encode the transmit data and form a transmit frame having a plurality of timeslots. At this time, a TPC command for the A-DPCH is embedded in a timeslot of the A-DPCH. In addition, when a TPC command for the HS-DPCCH is input from the TPC command generating section 19, the TPC command for the HS-DPCCH is embedded in a timeslot of the HS-DPCCH.

The modulator 21 performs modulation such as QPSK on the transmit data. The spreading section 22 spreads the modulated transmit signal with a spreading code assigned to each channel.

After performing processes such as D/A conversion, transmission power control, and up-conversion on the spread transmit signal, the transmission radio section 23 transmits the transmit signal via the antenna 12. Here, the transmission radio section 23 performs the transmission power control based on the judging result of the HO judging section 11.

When the HO judging section 11 has judged that the A-DPCH is not in the SHO state, the transmission radio section 23 controls the transmission power of the A-DPCH according to the TPC command for the A-DPCH and along therewith, controls the transmission power of the HS-DPCCH at the same power as that of the A-DPCH or the sum of the transmission power of the A-DPCH and an offset. That is, when the A-DPCH is not in the SHO state, the transmission power of the HS-DPCCH is also controlled according to the TPC command for the A-DPCH. Hence, when the A-DPCH is not in the SHO state, the change in the transmission power of the HS-DPCCH follows the change in that of the A-DPCH.

On the other hand, when the HO judging section 11 has judged that the A-DPCH is in the SHO state, the transmission radio section 23 controls the transmission power of the A-DPCH according to the TPC command for the A-DPCH and along therewith, controls the transmission power of the HS-DPCCH according to the TPC command for the HS-DPCCH. That is, the transmission powers of the A-DPCH and HS-DPCCH are controlled independently of each other according to the respective different TPC commands. Hence, when the A-DPCH is in the SHO state, the change in the transmission power of the HS-DPCCH is different from the change in that of the A-DPCH.

Note that in the case of the radio communication apparatus having the above configuration provided in a base station, processing for all communication terminal apparatuses with which the base station communicates is performed in parallel.

Next, taking the Fast-UL as an example, transmission power control of the HS-DPCCH will be explained. Note that transmission power control of the A-DPCH is the same as in the prior art, hence a description thereof being omitted.

When the A-DPCH is not in the SHO state, the transmission power of the HS-DPCCH is controlled at the same power as that of the A-DPCH or the sum of the transmission power of the A-DPCH and an offset. That is, when the A-DPCH is not in the SHO state, the transmission power of the HS-DPCCH is controlled according to the A-DPCH TPC command transmitted on the A-DPCH. Thus, when the A-DPCH is not in the SHO state, the reception SIR of the HS-DPCCH can meet an SIR requirement.

On the other hand, when the A-DPCH is in the SHO state, the transmission power control of the HS-DPCCH, to which the HHO is applied, is performed independently of that for the A-DPCH. That is, when the A-DPCH is in the SHO state, the transmission power of the HS-DPCCH is controlled according to the HS-DPCCH TPC command transmitted on the HS-DPCCH. FIGs. 5 and 6 show the case of the A-DPCH being in the SHO state.

First, transmission power control of the uplink HS-DPCCH will be explained using FIG. 5. When the A-DPCH gets in the SHO state, the base station 1 starts transmitting the TPC command for the HS-DPCCH to the communication terminal on the downlink HS-DPCCH. According to the TPC command, the communication terminal controls the transmission power of the uplink HS-DPCCH.

For example, when for the A-DPCH, the base station 1 transmits a TPC command to increase the transmission power and the base station 2 transmits a TPC command to decrease the transmission power as shown in FIG. 5, the communication terminal decreases the transmission power of the A-DPCH signal. When the A-DPCH is in the SHO state, the base station 1 transmits a TPC command for the A-DPCH and a TPC command for the HS-DPCCH independent thereof to the communication terminal. Therefore, even when decreasing the transmission power of the uplink A-DPCH signal, the communication terminal increases the transmission power of the uplink HS-DPCCH irrelevantly of that of the A-DPCH, if the base station 1 has transmitted a TPC command to increase the transmission power of the HS-DPCCH. By this means, even when the A-DPCH is in the SHO state, the transmission power of the HS-DPCCH is appropriately controlled, so that at the base station to which the HS-DPCCH is connected, the reception SIR of the HS-DPCCH can be maintained at a required SIR.

Next, transmission power control of the downlink HS-DPCCH will be explained using FIG. 6. When the A-DPCH gets in the SHO state, the communication terminal starts transmitting TPC commands for the HS-DPCCH to the base station 1 on the uplink HS-DPCCH. According to the TPC commands, the base station 1 controls the transmission power of the downlink HS-DPCCH.

For example, when for the A-DPCH, the communication terminal combines the A-DPCH signal transmitted from the base station 1 and the A-DPCH signal transmitted from the base station 2 as shown in FIG. 6, and generates such a TPC command that the reception SIR of the combined signal is kept at a target SIR, and then transmits the same TPC command to both the base stations 1 and 2. In the example of FIG. 6, a TPC command to decrease the transmission power is being sent to both base stations. According to the TPC command, the base stations 1 and 2 decrease the transmission power of the downlink A-DPCH. When the A-DPCH is in the SHO state, the communication terminal transmits a TPC command for the A-DPCH and a TPC command for the HS-DPCCH independent thereof to the base station 1. Therefore, even when decreasing the transmission power of the downlink A-DPCH signal, the base station 1 increases the transmission power of the downlink HS-DPCCH irrelevantly of that of the A-DPCH, if the communication terminal has transmitted a TPC command to increase the transmission power of the HS-DPCCH. By this means, even when the A-DPCH is in the SHO state, the transmission power of the HS-DPCCH is appropriately controlled, so that at the communication terminal the reception SIR of the HS-DPCCH can be maintained at a required SIR.

Next, taking the downlink as an example, a relationship between the transmission powers of the base stations and the reception SIRs of the communication terminal will be explained using FIG. 7.

The communication terminal always receives a CPICH (Common Pilot Channel) signal (CPICH1) being transmitted at a constant power from the base station 1 and a CPICH signal (CPICH2) being transmitted at a constant power from the base station 2.

Before the SHO of the A-DPCH starts, that is, when the A-DPCH is connected to only the base station 1, if the communication terminal moves away from the base station 1 towards the base station 2, the transmission power 320 of the A-DPCH at the base station 1 increases in order to maintain the reception SIR 360 of the A-DPCH at the communication terminal to be constant. Along therewith, the transmission power 310 of the HS-DPCCH at the base station 1 increases. Hence, the reception SIR 350 of the HS-DPCCH at the communication terminal is also maintained constant.

With the communication terminal moving further towards the base station 2, when the difference between the reception SIRs of the CPICH1 and the CPICH2 at the communication terminal reaches, e.g., 3dB, the A-DPCH gets in the SHO state. Thus, by monitoring the difference between the reception SIRs of the CPICH1 and the CPICH2, the communication terminal detects the start and end of the SHO, so that it can be judged whether the A-DPCH is in the SHO state. Note that the base station can judge whether the A-DPCH is in the SHO state also via a control signal sent from an upper layer, that is, a notice from a control station. Likewise, the communication terminal also can judge whether the A-DPCH is in the SHO state via a notice from a control station.

When the A-DPCH gets in the SHO state, the A-DPCH is connected to the base station 2 as well. Thus, as the transmission power 340 of the A-DPCH at the base station 2 increases, the transmission power 320 of the A-DPCH at the base station 1 decreases. During this time, the communication terminal combines the A-DPCH signals from the base stations 1 and 2, and thus the reception SIR 360 of the A-DPCH is maintained constant. Meanwhile, the transmission power of the HS-DPCCH is controlled according to TPC commands for the HS-DPCCH independently of the A-DPCH when the A-DPCH is in the SHO state. Therefore, when the A-DPCH is in the SHO state, even if the transmission power 320 of the A-DPCH at the base station 1 decreases, the transmission power 310 of the HS-DPCCH at the base station 1 increases. Thus, the reception SIR 350 of the HS-DPCCH at the communication terminal is maintained constant even when the A-DPCH is in the SHO state.

With the communication terminal moving further towards the base station 2, when the reception SIR of the CPICH1 becomes, e.g., 3dB lower than that of the CPICH2, the HS-DPCCH is handed over to the base station 2 in the HHO manner. After the HS-DPCCH has been HHO-handed over, the TPC command for the HS-DPCCH is transmitted from the base station 2 instead of the base station 1. Because, after the HS-DPCCH has undergone HHO, the A-DPCH is still in the SHO state, the transmission power of the HS-DPCCH is controlled according to TPC commands for the HS-DPCCH independently of the A-DPCH. Then, as the communication terminal moves yet further towards the base station 2, the transmission power 330 of the HS-DPCCH at the base station 2 gradually decreases.

With the communication terminal moving still further towards the base station 2, when at the communication terminal the reception SIR of the CPICH1 goes down at, e.g., 5dB lower than that of the CPICH2, the SHO of the A-DPCH ends. That is, the A-DPCH is put in a state of being connected to only the base station 2. After the SHO of the A-DPCH ends, the transmission power of the HS-DPCCH is controlled according to the TPC command for the A-DPCH. Therefore, when the communication terminal moves yet further towards the base station 2, as the transmission power 340 of the A-DPCH at the base station 2 decreases in order to maintain the reception SIR 360 of the A-DPCH at the communication terminal constant, the transmission power 330 of the HS-DPCCH at the base station 2 also decreases. Thus, the reception SIR 350 of the HS-DPCCH at the communication terminal is also maintained constant.

Next, the start timing and end timing for transmitting TPC commands for the HS-DPCCH will be explained using FIG. 8.

For the downlink A-DPCH, whether or not the A-DPCH is in the SHO state, a TPC command to be used in transmission power control of the uplink A-DPCH and a pilot to be used in the measurement of SIR of the downlink A-DPCH are transmitted in each timeslot from a base station to the communication terminal. Likewise, for the uplink A-DPCH, whether or not the A-DPCH is in the SHO state, a TPC command to be used in transmission power control of the downlink A-DPCH and a pilot to be used in the measurement of SIR of the uplink A-DPCH are transmitted in each timeslot from the communication terminal to the base station.

Meanwhile, for the downlink HS-DPCCH, only when the A-DPCH is in the SHO state, a TPC command to be used in transmission power control of the uplink HS-DPCCH and a pilot to be used in the measurement of SIR of the downlink HS-DPCCH are transmitted in each timeslot from a base station to the communication terminal. Likewise, for the uplink HS-DPCCH, only when the A-DPCH is in the SHO state, a TPC command to be used in transmission power control of the downlink HS-DPCCH and a pilot to be used in the measurement of SIR of the uplink HS-DPCCH are transmitted in each timeslot from the communication terminal to the base station. That is, the transmission of TPC command for the HS-DPCCH starts when the SHO of the A-DPCH starts, and the transmission of TPC command for the HS-DPCCH ends when the SHO of the A-DPCH ends.

Note that although data, pilots, and TPC commands are time-multiplexed in FIG. 8, they may be IQ-multiplexed.

As described above, the synchronization between the SHO start/end timings for the A-DPCH and the transmission start/end timings of sending TPC commands for the HS-DPCCH makes it unnecessary to transmit TPC commands for the HS-DPCCH when the A-DPCH is not in the SHO state, which helps to reduce interferences due to the HS-DPCCH affecting other channels.

Furthermore, battery consumption of the communication terminal can be suppressed. Moreover, when the A-DPCH is in the SHO state, a TPC command for the HS-DPCCH is transmitted in each timeslot on the HS-DPCCH. Hence, the transmission power control of the HS-DPCCH can be accurately performed even when the communication terminal moves at high speed.

While, in the present embodiment, the description has been made taking the Fast-UL as an example, not being limited to this, the present invention can be applied to all radio communication systems where dedicated channels to which soft hand-over is applied and dedicated channels to which hard hand-over is applied are mixed and where the dedicated channels to which hard hand-over is applied are uplink and downlink channels.

As described above, according to the present invention, the appropriate transmission power control is performed on the HS-DPCCH, so that the transmission power of the HS-DPCCH does not become excessive and the reception SIR of the HS-DPCCH can be maintained at a required SIR.

The present description is based on Japanese Patent Application No. 2002-239734 filed on August 20, 2002, which is herein incorporated by reference.

### Industrial Applicability

The present invention can be applied to radio communication terminal apparatuses and radio communication base station apparatuses used in a mobile communication system.

## Claims

1. A transmission power control method used in a radio communication system where a first dedicated channel to which soft hand-over is applied and a second dedicated channel to which hard hand-over is applied are mixed,
wherein when the first dedicated channel is not in a soft hand-over state, transmission power control of the second dedicated channel is performed according to a TPC command for the first dedicated channel transmitted on the first dedicated channel, and
when the first dedicated channel is in the soft hand-over state, transmission power control of the second dedicated channel is performed according to a TPC command for the second dedicated channel transmitted on the second dedicated channel.

2. A TPC command transmitting method used in a radio communication system where a first dedicated channel to which soft hand-over is applied and a second dedicated channel to which hard hand-over is applied are mixed,
wherein when the first dedicated channel is in a soft hand-over state, a TPC command for the first dedicated channel is transmitted on the first dedicated channel and a TPC command for the second dedicated channel is transmitted on the second dedicated channel.

3. A TPC command transmitting method used in a radio communication system where a first dedicated channel to which soft hand-over is applied and a second dedicated channel to which hard hand-over is applied are mixed,
wherein after soft hand-over of the first dedicated channel starts, transmission of a TPC command for the second dedicated channel starts on the second dedicated channel.

4. A radio communication apparatus used in a radio communication system where a first dedicated channel to which soft hand-over is applied and a second dedicated channel to which hard hand-over is applied are mixed, said radio communication apparatus comprising:
a judging section that judges whether the first dedicated channel is in a soft hand-over state;
an extracting section that, when said judging section judges that the first dedicated channel is not in the soft hand-over state, extracts only a TPC command for the first dedicated channel from a received signal, and
when said judging section judges that the first dedicated channel is in the soft hand-over state, extracts both a TPC command for the first dedicated channel and a TPC command for the second dedicated channel from the received signal; and
a control section that, when said judging section judges that the first dedicated channel is not in the soft hand-over state, performs both transmission power control of the first dedicated channel and transmission power control of the second dedicated channel according to the TPC command for the first dedicated channel extracted by said extracting section, and
when said judging section judges that the first dedicated channel is in the soft hand-over state, performs transmission power control of the first dedicated channel according to the TPC command for the first dedicated channel extracted by said extracting section, and performs transmission power control of the second dedicated channel according to the TPC command for the second dedicated channel extracted by said extracting section.

5. A radio communication apparatus used in a radio communication system where a first dedicated channel to which soft hand-over is applied and a second dedicated channel to which hard hand-over is applied are mixed, said radio communication apparatus comprising:
a judging section that judges whether the first dedicated channel is in a soft hand-over state;
a measuring section that, when said judging section judges that the first dedicated channel is not in the soft hand-over state, measures only an SIR of the first dedicated channel and,
when said judging section judges that the first dedicated channel is in the soft hand-over state, measures both the SIR of the first dedicated channel and an SIR of the second dedicated channel;
a generating section that, when said judging section judges that the first dedicated channel is not in the soft hand-over state, generates only a TPC command for the first dedicated channel based on a result of comparing the SIR of the first dedicated channel measured by said measuring section with a target SIR, and
when said judging section judges that the first dedicated channel is in the soft hand-over state, generates a TPC command for the first dedicated channel based on a result of comparing the SIR of the first dedicated channel measured by said measuring section with a target SIR, and a TPC command for the second dedicated channel based on a result of comparing the SIR of the second dedicated channel measured by said measuring section with a target SIR; and
a transmitting section that transmits one or both of the TPC command for the first dedicated channel and the TPC command for the second dedicated channel generated by said generating section.
